# EUROPEAN PATENT APPLICATION

(11) **EP 1 180 811 A2**
(43) Date of publication of application: **20.02.2002**
(21) Application number: 01119842.1
(22) Date of filing: 16.08.2001
(51) Int. Cl.: H01M 4/58, H01M 10/40

(54) **Non-aqueous electrolyte secondary cell**

(30) Priority: 18.08.2000 JP 2000248672; 27.07.2001 JP 2001228239
(71) Applicant: SONY CORPORATION, Tokyo (JP)
(72) Inventor: Atsumi, Yoshinori, c/o Sony Fukushima Corporation, Koriyama-shi, Fukushima (JP); Yamamoto, Masahiro, c/o Sony Fukushima Corporation, Koriyama-shi, Fukushima (JP); Ohta, Yasuo, c/o Sony Fukushima Corporation, Koriyama-shi, Fukushima (JP)
(74) Representative: Müller . Hoffmann & Partner Patentanwälte

(57) **Abstract**

A non-aqueous electrolyte secondary cell including: a cathode containing a compound expressed by a general formula AₓM_{y}PO₄ (wherein A represents an alkali metal and M represents a transition element, which are contained in ranges: 0 < x ≤ 2 and 1 ≤ y ≤ 2); an anode containing sintered carbon material prepared by sintering a carbon material capable of doping/dedoping lithium; and a non-aqueous electrolyte solution. This non-aqueous electrolyte secondary cell can exhibit a high temperature storage characteristic and a high capacity.

## Description

### BACKGROUND OF THE INVENTION

### Field of the Invention

The present invention relates to a non-aqueous electrolyte secondary cell.

### Description of the Related Art

As portable type electronic devices are spread, secondary cells which can be repeatedly discharged and charged are widely used instead of primary cells that can be charged/discharged only once.

As this type of secondary cell, attention is paid on lithium-based secondary cell as the non-aqueous electrolyte secondary cell using a carbon material capable of doping/dedoping lithium as an anode active material and a lithium composite oxide such as LiCoO₂, LiₓNi_{1-y}Co_{y}O₂, and LiMn₂O₄ as a cathode material.

As compared to the conventionally used lead-acid cell and nickel-cadmium cell, the lithium-based secondary cell has a high discharge voltage, a high energy density, and less self-discharge, and shows an excellent cycle characteristic.

The lithium-based secondary cell having such excellent cell characteristics is used as an operating power supply for portable electronic devices including electronic watch requiring to use the cell for a long period of time. Moreover, the lithium-based secondary cell is also greatly expected as a power supply of a small-size electronic device such as a portable calculator, camera, radio, and the require that require a long-period charge/discharge cycle characteristic.

By the way, the lithium-based secondary cell is often used as a power supply for memory backup stored for a long period of time and supplies power when required in various electronic devices. For this it is necessary to provide a cell having capacity capable of backup for a long period of time not depending on the storage environment conditions.

### SUMMARY OF THE INVENTION

The present invention is proposed by considering the above described conventional problems and it is an object of the present invention to provide a non-aqueous electrolyte secondary cell exhibiting an excellent storage characteristic even when stored in a high temperature environment for a long period of time, and having a high capacity.

According to one aspect of the present invention, there is provided a non-aqueous electrolyte secondary cell using a cathode containing a compound expressed by a general formula AₓM_{y}PO₄ (wherein A represents an alkali metal, M represents a transition element, and they are contained in the range of 0 < x ≤ 2 and 1 ≤ y ≤ 2)), an anode containing a carbon sintered material prepared by sintering a carbon material capable of doping/dedoping lithium, and a non-aqueous electrolyte solution.

The non-aqueous electrolyte secondary cell according to the present invention having the aforementioned configuration uses a cathode containing a compound expressed by a general formula AₓM_{y}PO₄ (wherein A represents an alkali metal, M represents a transition element, and they are contained in the range of 0 < x ≤ 2 and 1 ≤ y ≤ 2)) in combination with an anode containing a carbon sintered material prepared by sintering a carbon material capable of doping/dedoping lithium and accordingly, shows an excellent high temperature storage characteristic and a high capacity.

Further, according to another aspect of the present invention, there is provided a non-aqueous electrolyte secondary cell includes a cathode containing compound expressed by a general formula AₓM_{y}PO₄ (wherein A represents an alkali metal and M represents a transition element, which are contained in ranges: 0 < x ≤ 2 and 1 ≤ y ≤ 2), an anode capable of doping/dedoping lithium, and a non-aqueous electrolyte solution, wherein the cathode is a molded body made from an active material, conductive agent and/or binder; and the anode is a molded body made from an active material and/or conductive agent alone.

This non-aqueous electrolyte secondary cell uses the anode molded only from an active material and/or conductive agent and can increase the anode active material filling density because no binder is used, thereby enabling to obtain an anode having a large reaction area.

### BRIEF DESCRIPTION OF THE DRAWINGS

Fig. 1 is a cross sectional view showing an example of a non-aqueous electrolyte secondary cell according to the present invention.

Fig. 2 shows discharge capacity recovery ratio of the non-aqueous electrolyte secondary cell after stored in a high temperature environment for a predetermined period of time.

Fig. 3 shows discharge capacity recovery ratio of the non-aqueous electrolyte secondary cell after stored in various temperature environment conditions.

Fig. 4 shows discharge time characteristic of the non-aqueous electrolyte secondary cell until it reaches a lower limit of discharge voltage.

### DETAILED DESCRIPTION OF PREFERRED EMBODIMENTS

Description will now be directed to a non-aqueous electrolyte secondary cell according to an embodiment of the present invention with reference to the attached drawings.

The non-aqueous electrolyte secondary cell according to the present invention includes a cathode containing a compound expressed by a general formula AₓM_{y}PO₄ (wherein A represents an alkali metal and M represents a transition metal, which are contained in the ranges of 0 < x ≤ 2 and 1 ≤ y ≤ 2), an anode containing a sintered carbon material preparing by sintering a carbon material capable of doping/dedoping lithium, and a non-aqueous electrolyte solution.

The cathode has a cathode active material and a cathode current collector made from, for example, aluminum.

The cathode active material is a compound expressed by a general formula AₓM_{y}PO₄ (wherein A represents an alkali metal and M represents a transition metal, which are contained in the ranges of 0 < x ≤ 2 and 1 ≤ y ≤ 2). In the compound expressed by a general formula AₓM_{y}PO₄ (hereinafter, simply referred to as AₓM_{y}PO₄), M preferably includes at least one of Co, Ni, Fe, Mn, Cu, Mg, Zn, Ca, Cd, Sr, and Ba.

Moreover, the AₓM_{y}PO₄ is preferably a compound having olivine structure and expressed by a general formula LiₓM_{y}PO₄ such as LiₓFePO₄, LiFePO₄, LiₓFe₂(PO₄)₃, LiMnPO₄, LiCoPO₄, LiNiPO₄, and LiCuPO₄. Especially preferable is to use a compound expressed by a general formula LiₓFe_{y}PO₄.

The cathode active material preferably contains AₓM_{y}PO₄ having a particle diameter not greater than 10 micrometers. By containing AₓM_{y}PO₄ having particle diameter not greater than 10 micrometers, during charge/discharge, lithium ions can sufficiently be diffused into the center portion of the crystal structure of the AₓM_{y}PO₄ particle and charge/discharge reaction can smoothly proceed under any temperature environment.

When containing AₓM_{y}PO₄ having the particle diameter exceeding 10 micrometers, the lithium ions cannot be diffused into the center portion of the crystal structure of the AₓM_{y}PO₄ particles and the difference of concentration of lithium ions between the particle surface and the particle center portion causes potential difference, which may cause distortion of the crystal structure in the AₓM_{y}PO₄ particles. When charge/discharge is repeated in such a state, the crystal structure of the AₓM_{y}PO₄ particles may be destroyed, deteriorating the cell capacity.

Moreover, when the AₓM_{y}PO₄ is a compound having the olivine structure, the cathode active material preferably contains AₓM_{y}PO₄ having a particle diameter not greater than 1 micrometer. By containing AₓM_{y}PO₄ having the particle diameter not greater than 1 micrometer, lithium ions are smoothly diffused, which suppresses destruction of the crystal structure of the AₓM_{y}PO₄ particles, thereby preventing deterioration of the cell capacity.

Thus, by using the cathode active material containing particles having a diameter not greater than 1 micrometer, the non-aqueous electrolyte secondary cell becomes preferable for charge/discharge reactions using a large current.

It should be noted that it is possible to add known conductive material and binders to the cathode.

The anode material capable of doping/dedoping lithium is a material containing sintered carbon material prepared by sintering a carbon material capable of doping/dedoping lithium. The carbon material constituting the sintered carbon material may be, for example, non-graphitizable carbon, graphitizable carbon, or graphite. This sintered carbon material is prepared by sintering a carbon material and not containing a binder.

Moreover, the anode may be prepared by using a metal or a semiconductor capable of forming an alloy or compound together with lithium or the alloy or compound thus obtained. The metal, alloy, or the compound can be expressed, for example, by DₛEₜLiᵤ. In this chemical formula, D represents a metal element or a semiconductor element capable of forming an alloy or compound together with lithium. Moreover, the s, t, and u values are as follows: s > 0, t ≥ 0, and u ≥ 0.

Here, the metal element or semiconductor element capable of forming an alloy or compound together with lithium is preferably a metal element or semiconductor element of 4B group and especially preferable is silicon or tin. The most preferable is silicon. These alloys or compound are preferably, SiB₄, SiB₆, Mg₂Si, Mg₂SaANi_{z}Si, TiSi₂, MoSi₂, CoSi₂, NiSi₂, CaSi₂, CrSi₂, Cu₅Si, FeSi₂, MnSi₂, NbSi₂, TaSi₂, VSi₂, WSi₂, or ZnSi₂, and it is possible to use an electrode formed by using these materials.

When using a carbon material as an anode active material, conventionally, a carbon material powder and binder are kneaded to prepare an anode composite mixture, which is formed in to a desired electrode form or retained by a current collector to constitute the anode. In such an anode, the use of the binder reduces the anode active material filling density and as a result it is impossible to sufficiently increase the cell energy density.

In contrast to this, when a carbon material is pressed into a desired electrode form and sintered in an inert gas at a predetermined temperature to obtain a sintered carbon material, since no binder is used, it is possible to increase the anode active material filling density and obtain an anode having a large reaction area. By using the anode containing the sintered carbon material prepared by sintering a carbon material, the cell energy density and the charge/discharge efficiency are improved.

It should be noted that the anode may be prepared as a sintered electrode made from a sintered carbon material and may be prepared by molding and sintering a current collector material in combination with a carbon material so as to obtain a single body of the sintered carbon material and the current collector.

The non-aqueous electrolyte solution is prepared by solving an electrolyte salt in a non-aqueous solvent.

The non-aqueous solvent may be any of the non-aqueous solvents which have been used conventionally for this type of non-aqueous electrolyte secondary cell. For example, it is possible to use propylene carbonate, ethylene carbonate, 1, 2-dimethoxyethane, 1, 2-diethoxyethane, diethyl carbonate, methyl ethyl carbonate, dimethyl carbonate, γ-butyrolactone, tetrahydrofuran, 1, 3-dioxolane, 4-methyl-1, 3-dioxolane, diethyl ether, sulfolane, methyl sulfolane, acetonitrile, propionitrile, and the like. It should be noted that each of these non-aqueous solvents may be used solely or in combination with others.

The electrolyte salt may be any of lithium salts having ion conductivity and is not limited to a particular material. For example, it is possible to use LiClO₄, LiAsF₆, LiPF₆, LiBF₄, LiB(C₆H₅)₄, LiCl, LiBr, CH₃SO₃Li, CF₃SO₃Li, N(CₙF₂ₙSO₂)₂Li, and the like. Each of these electrolyte salts may be used solely or in combination with others.

The non-aqueous electrolyte secondary cell having the aforementioned configuration includes a cathode containing a compound expressed by the general formula AₓM_{y}PO₄ (wherein A represents an alkali metal and M represents a transition element which are contained in the ranges 0 < x ≤ 2 and 1 ≤ y ≤ 2), an anode containing the sintered carbon material prepared by sintering a carbon material capable of doping/dedoping lithium, and the non-aqueous electrolyte solution, and accordingly, exhibits an excellent storage characteristic at a high temperature and has a high capacity.

It should be noted that the cell according to the present invention may be formed in a coin shape, a button shape, a prism shape using a layered electrode, or in a card shape.

### EXAMPLES

Hereinafter, the present invention will be detailed through specific examples.

### Example 1

Firstly, to prepare the cathode active material, vivianite (Fe₃(PO₄)₂·8H₂O), diammonium hydrogen phosphate ((NH₄)₂HPO₄), and lithium carbonate (Li₂CO₃) were mixed with moll ratio of 2 : 2 : 3. Next, this mixture was sintered in a nitrogen atmosphere at 800°C for 20 hours to obtain LiFePO₄.

The LiFePO₄ thus obtained, carbon black as a conductive material, and fluorine resin powder as binder were mixed with weight ratio of 80 : 15 : 5, which was sufficiently mixed in a mortar.

The cathode mixture 500 mg after the mixing was filled to obtain a preparatory molded body, and then an aluminum net to be used as a cathode current collector was placed on this preparatory molded body, which was compression-molded. Thus, a pellet-shaped cathode having an outer diameter 15.5 mm and height 0.7 mm was obtained.

The anode was prepared as follows.

Two types ofmesophase carbons having different transformation temperatures, i.e., a mesophase carbon temporarily sintered at 600°C and a mesophase carbon not sintered were mixed and then formed into particles, which were molded into a pellet shape. The pellet was processed in an inert gas and vacuum so as to obtain a pellet-shaped anode as a sintered carbon body having an outer diameter of 15.6 mm, height of 0.8 mm, and weight of 180 mg.

Next, the electrolyte solution was prepared as follows.

Propylene carbonate and methyl ethyl carbonate were mixed with an identical ratio to obtain a non-aqueous solvent. In this mixture solvent, LiPF₆ as an electrolyte salt was solved with a ratio of 1 mol/l so as to prepare the electrolyte solution.

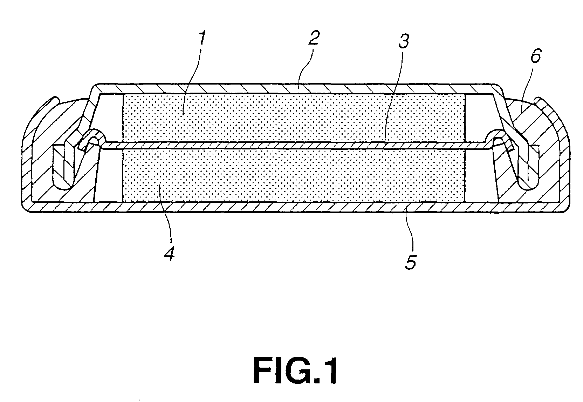

By using the cathode, anode, electrolyte solution thus prepared, the coin-shaped non-aqueous electrolyte secondary cell shown in Fig. 1 was prepared as follows.

Firstly, the anode 1 was placed in an anode can 2 formed from stainless steel. A separator 3 made from micro porous polypropylene having a thickness of about 50 micrometers was arranged on the anode 1. After this, the electrolyte solution was poured into the anode can 2. Next, the cathode 4 was placed on the separator 3 and the electrolyte solution was poured. After this, a cathode can 5 having three layers of aluminum, stainless steel, and nickel was caulked and fixed to the anode can 2 through a sealing gasket 6 prepared from polypropylene. Thus, a coin-shaped non-aqueous electrolyte secondary cell having an outer diameter of 20 mm and height of 2.5 mm was obtained.

### Example 2

Next, Example 2 will be explained. In Example 2, in the same way as the non-aqueous electrolyte secondary cell of Example 1, LiFePO₄ was used as the cathode active material and the cathode mixture was filled in the same way as Example 1 so as to prepare a preparatory molded body. A net made from aluminum to be used as a cathode current collector was placed on the preparatory molded body and compression-molded to obtain a pellet-shaped cathode having an outer diameter of 15. 5 mm and height of 0.7 mm.

The anode was prepared as follows.

Firstly, silicon powder 281 g was mixed with magnesium powder 486 g. The mixture was put into an iron port and heated in hydrogen stream at 1200°C and then cooled down to the room temperature to obtain an ingot. The ingot was pulverized by a ball mill in a mixture atmosphere of oxygen gas and argon (Ar) gas to obtain powder. Here, the oxygen partial pressure was set to 100 Pa.

The powder obtained was observed using a scanning electron microscope (SEM) and the average particle diameter was found to be about 5 micrometers. Moreover, structural analysis was performed using the X-ray diffraction method. The diffraction peak obtained was confirmed to be Mg₂Si registered in the JCPDS file. This Mg₂Si was mixed with mesophase carbon not sintered and the mixture was molded into a pellet shape, which was processed in an inert gas and vacuum to obtain a pellet-shaped anode as a sintered carbon body having an outer diameter of 15.6 mm, height of 0.8 mm, and weight of 180 mg.

The non-aqueous solvent was prepared by mixing ethylene carbonate and methyl ethyl carbonate with an identical mixing ratio. In this mixture solvent, LiPF₆ as an electrolyte salt was solved with 1 mol/l ratio to obtain electrolyte solution.

By using the cathode, anode, and electrolyte solution thus prepared, in the same way as in Example 1, the anode 1 was put into an anode can 2 formed from stainless steel and a separator 3 made from micro porous polypropylene having a thickness of about 50 micrometers was arranged on the anode 1. After this, the electrolyte solution was poured into the anode can 2. Next, the cathode 4 was arranged on the separator 3 and the electrolyte solution was poured. After this, a cathode can 5 having three layers of aluminum, stainless steel, and nickel was caulked and fixed to the anode can 2 through a sealing gasket 6 made from polypropylene. Thus, a coin-shaped non-aqueous electrolyte secondary cell having an outer diameter of 20 mm and height of 2.5 mm was obtained.

### Comparative Example 1

Firstly, a cathode was prepared as follows.

For preparing a cathode active material, cobalt oxide and lithium carbonate (Li₂Co₃) were mixed with a mol ratio of 1 : 0.5 and the mixture was sintered in air at temperature of 900°C for 5 hours to obtain lithium-containing composite oxide LiCoO₂. Next, LiCoO₂ as the cathode active material, graphite as a conductive agent, and polytetrafluoroethylene as binder were mixed with a weight ratio of 91 : 6 : 3, and the cathode mixture was sufficiently mixed

Next, the LiCoO₂-containing cathode mixture 500 mg was filled and a preparatory molded body was prepared. An aluminum net to be used as a cathode current collector was placed on the preparatory molded body and compression-molded to obtain a pellet-shaped cathode having an outer diameter of 15.5 mm and height of 0.7 mm.

Next, an anode was prepared as follows.

In nitrogen at temperature of 1000°C, sintered mesophase carbon as a carbon material was mixed with polyvinylidene fluoride as binder with a weight ratio of 90 : 10. Next, this mixture was added by 50 wt% of N-methyl-pyrrolidone and dried in an oven at temperature of 120°C. The dried mixture was pulverized into powder to obtain an anode material. This anode material was molded into a pellet shape to obtain an anode having an outer diameter of 15.6 mm, height of 0.8 mm, and weight of 180 mg.

A non-aqueous electrolyte secondary cell was prepared in the same way as in Example 1 except for that the aforementioned cathode and anode were used.

### Comparative Example 2

A non-aqueous electrolyte secondary cell was prepared in the same way as in Example 1 except for that the cathode prepared in Comparative Example 1 was used.

### Comparative Example 3

A non-aqueous electrolyte secondary cell was prepared in the same way as in Example 1 except for that the anode prepared in Comparative Example 1 was used.

For evaluating the high temperature storage characteristic, Examples 1 and 2 and Comparative Examples 1 to 3 were subjected to a 24-hour constant-current and constant-voltage charge with charge current 5.0 mA and an upper limit of charge voltage 4.0V. Then; with a discharge current set to 0.3 mA and a lower limit of discharge voltage set to 2.0V, a constant-current discharge was performed to measure an initial discharge capacity. Next, this cell was again subjected to a constant-current and constant-voltage charge and stored in a high temperature environment of temperature 60°C for a predetermined period of time. Then, the discharge capacity was measured. Thus, a discharge capacity recovery ratio of the discharge capacity after the storage against the initial discharge capacity was obtained. It should be noted that the discharge capacity recovery ratio was obtained for the cell which has been stored for 20 days, 40 days, and 80 days.

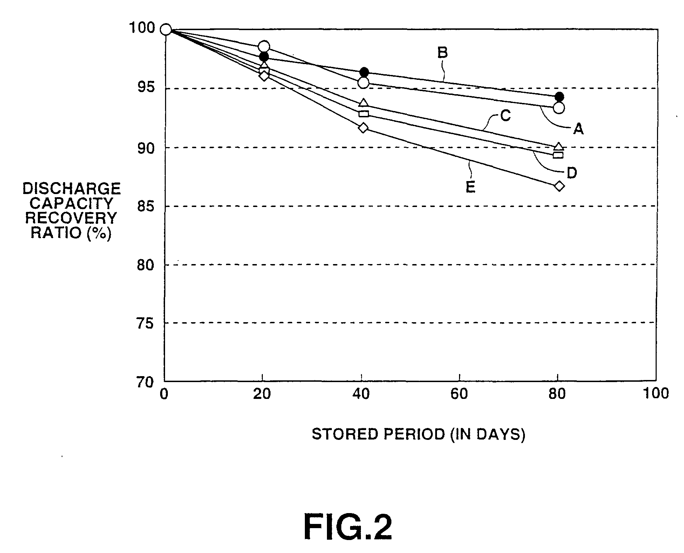

Fig. 2 shows results of the aforementioned measurement. In Fig. 2, A corresponds to Example 1, B corresponds to Example 2, C corresponds to Comparative Example 1, D corresponds to Comparative Example 2, and E corresponds to Comparative Example 3. It should be noted that the vertical axis represents the discharge capacity recovery ratio (unit: %) and the horizontal axis represents storage period (unit: day).

As can be seen from Fig. 2, Example 1 having the cathode containing LiFePO₄ and the anode containing the sintered carbon material prepared by sintering a carbon material reach a high discharge capacity recovery ratio exceeding 90% even when stored under a high temperature for a long period of time of 80 days or more.

Similarly, Example 2 having the cathode containing LiFePO₄ and the pellet-shaped anode made from a sintered carbon material reaches a high discharge capacity recovery ratio exceeding 90 % even when stored under a high temperature for a long period of time of 80 days or more.

In contrast to this, Comparative Example 1 having the cathode containing LiCoO₂ and the anode made from the anode composite mixture prepared by kneading carbon material powder and binder shows remarkable deterioration of discharge capacity recovery ratio when stored under high temperature for a long period of time and cannot have the high temperature storage characteristic.

Moreover, Comparative Example 2 having the anode containing the sintered carbon material prepared by sintering a carbon material and the cathode containing LiCoO₂ as the lithium composite oxide and Comparative Example 3 having the cathode containing LiFePO₄ but the anode made from the anode composite mixture prepared by kneading carbon material powder and binder show an improved discharge capacity recovery ratio as compared to Comparative Example 1 but the discharge capacity recovery ratio is deteriorated by 10 % or more when stored for a long period of time.

Accordingly, it can be seen that when the cathode containing LiFePO₄ is used in combination with the anode containing sintered carbon material prepared by sintering a carbon material, the high temperature storage characteristic is further improved.

Moreover, Example 1 and Comparative Example 2 thus prepared were subjected to a 24-hour constant-current and constant-voltage charge with charge current 5.0 mA and an upper limit of charge voltage 3.5V and the under various temperature conditions, subjected to a constant-current discharge with discharge current 0.3 mA and a lower limit of discharge voltage 2.0V, thereby measuring the discharge capacity to obtain the discharge capacity recovery ratio showing ratio of the discharge capacity after the storage against the initial discharge capacity.

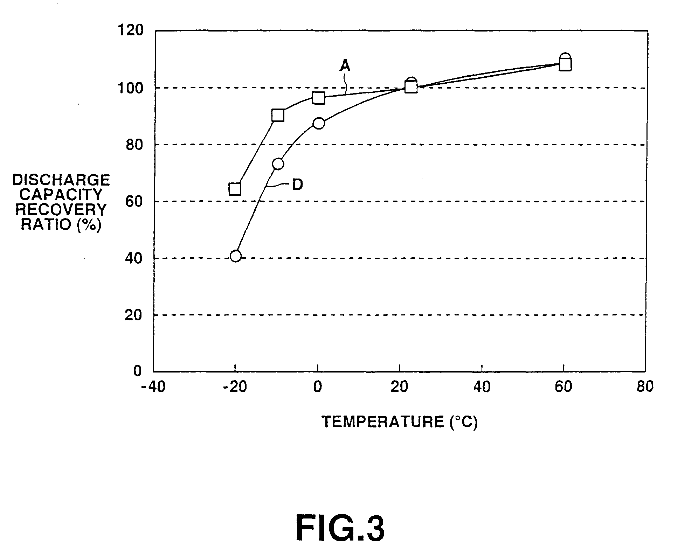

Fig. 3 shows results of the aforementioned measurements. In Fig. 3, A shows characteristic of Example 1, and D shows characteristic of Comparative Example 2. It should be noted that in Fig. 3, the vertical axis represents the discharge capacity recovery ratio (unit: %) and the horizontal axis represents the temperature condition (unit: °C).

As can be seen from Fig. 3, Example 1 having the cathode containing LiFePO₄ and the anode containing sintered carbon material prepared by sintering a carbon material shows an improved discharge capacity recovery ratio under a low temperature environment as compared to Comparative Example 2 having the anode containing sintered carbon material prepared by sintering a carbon material but the cathode containing a lithium composite oxide LiCoO₂.

Accordingly, it has been found that when the cathode containing LiFePO₄ is used, it is possible to obtain a preferable discharge characteristic under a low temperature environment.

Furthermore, Example 1 and Comparative Example 2 thus prepared were subjected to a 24-hour constant-current and constant-voltage charge with charge current 5.0 mA and an upper limit of charge voltage 3.5V at temperature of 23°C and then to a constant-current discharge with discharge current 2 mA and a lower limit of discharge voltage 2.0V to measure a discharge time.

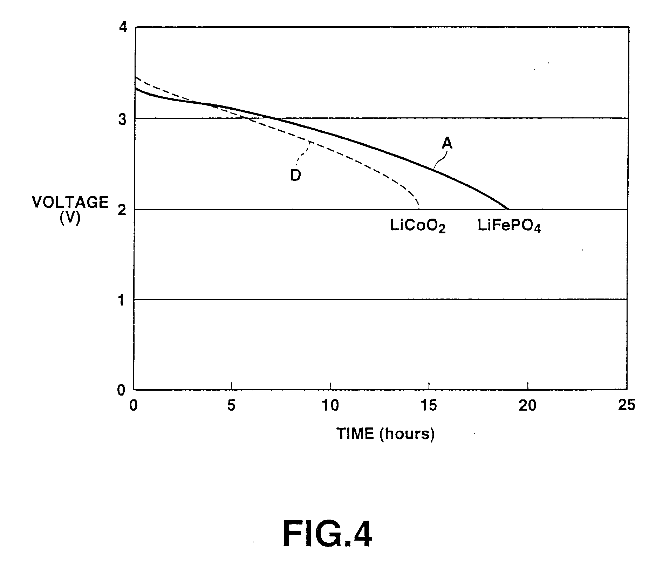

Fig. 4 shows results of the aforementioned measurement. In Fig. 4, A shows characteristic of Example 1 and D shows characteristic of Comparative Example 2. It should be noted that the vertical axis represents voltage (unit: V) and the horizontal axis represents discharge time (unit: hour).

As can be seen from Fig. 4, Example 1 shows discharge time of 20 hours while Comparative Example 2 shows discharge time of 15 hours. Thus, Example 1 has an improved capacity by 30 % as compared to Comparative Example 2.

This shows that when using the cathode containing LiFePO₄ in combination with the anode containing sintered carbon material prepared by sintering a carbon material, it is possible to obtain a non-aqueous electrolyte secondary cell having a high capacity.

As is clear from the above given explanation, the non-aqueous electrolyte secondary cell according to the present invention has the cathode containing the compound expressed by a general formula AₓM_{y}PO₄ (wherein A represent an alkali metal and M represents a transition metal, which are contained in the ranges: 0 < x ≤ 2 and 1 ≤ y ≤ 2) and the anode containing the sintered carbon material prepared by sintering a carbon material capable of doping/dedoping lithium and exhibits an excellent high temperature storage characteristic and a high capacity.

Furthermore, when the anode is made from a molded body containing active material and/or conductive agent alone, the anode active material filling density can be increased because no binder is used. This enables to obtain an anode having a large reaction area, thereby enabling to obtain a non-aqueous electrolyte secondary cell exhibiting an excellent high temperature storage characteristic and a high capacity.

## Claims

1. A non-aqueous electrolyte secondary cell comprising:
a cathode containing a compound expressed by a general formula AₓM_{y}PO₄ (wherein A represents an alkali metal and M represents a transition element, which are contained in ranges: 0 < x ≤ 2 and 1 ≤ y ≤ 2);
an anode containing sintered carbon material prepared by sintering a carbon material capable of doping/dedoping lithium; and
a non-aqueous electrolyte solution.

2. The non-aqueous electrolyte secondary cell as claimed in Claim 1, wherein the M includes at least one of Co, Ni, Fe, Mn, Cu, Mg, Zn, Ca, Cd, Sr, and Ba.

3. The non-aqueous electrolyte secondary cell as claimed in Claim 1, wherein the compound expressed by the general formula AₓM_{y}PO₄ is LiₓFe_{y}PO₄.

4. A non-aqueous electrolyte secondary cell comprising a cathode containing a compound expressed by a general formula AₓM_{y}PO₄ (wherein A represents an alkali metal and M represents a transition element, which are contained in ranges: 0 < x ≤ 2 and 1 ≤ y ≤ 2), an anode capable of doping/dedoping lithium, and a non-aqueous electrolyte solution, wherein
the cathode is a molded body made from an active material, conductive agent and/or binder; and
the anode is a molded body made from an active material and/or conductive agent alone.

5. The non-aqueous electrolyte secondary cell as claimed in Claim 4, wherein the active material constituting the cathode contains AₓM_{y}PO₄ having a particle diameter not greater than 10 micrometers.

6. The non-aqueous electrolyte secondary cell as claimed in Claim 4, wherein the anode uses at least one material selected from carbon powder, a material capable of forming an alloy with lithium, and a material capable of forming a compound with lithium.
